# EUROPÄISCHE PATENTANMELDUNG

(11) **EP 1 834 876 A2**
(43) Veröffentlichungstag der Anmeldung: **19.09.2007**
(21) Anmeldenummer: 07000956.8
(22) Anmeldetag: 18.01.2007
(51) Int. Cl.: B64D 11/06, B64D 47/02

(54) **Sitzvorrichtung mit einer Arbeitsleuchteinheit**

(30) Priorität: 18.03.2006 DE 102006012599
(71) Anmelder: Recaro Aircraft Seating GmbH & Co. KG, 74523 Schwäbisch Hall (DE)
(72) Erfinder: Schweizer, Oliver, 88161 Lindenberg (DE)
(74) Vertreter: Daub, Thomas

(57) **Zusammenfassung**

Die Erfindung geht aus von einer Sitzvorrichtung, insbesondere einer Flugzeugsitzvorrichtung, mit wenigstens einer Sitzeinheit (10, 12, 14) und wenigstens einer Arbeitsleuchteinheit (16, 18, 20, 22).

Es wird vorgeschlagen, dass die Arbeitsleuchteinheit (16, 18, 20, 22) in einem rückwärtigen Bereich der Sitzeinheit (10, 12, 14) angeordnet ist.

## Beschreibung

### Stand der Technik

Die Erfindung geht aus von einer Sitzvorrichtung nach dem Oberbegriff des Anspruchs 1.

Es sind bereits Sitzvorrichtungen, insbesondere Flugzeugsitzvorrichtungen, bekannt, die eine Sitzeinheit und eine oder mehrere Arbeitsleuchteinheiten aufweisen. Die Arbeitsleuchteinheiten sind hierbei entweder im Bereich eines Staufachs oder in einer Mittelkonsole zwischen zwei Sitzeinheiten angeordnet.

Der Erfindung liegt insbesondere die Aufgabe zugrunde, eine Sitzvorrichtung, insbesondere für Flugzeugsitze, mit einer besonders vorteilhaften Beleuchtung eines Arbeitsbereichs für den Passagier bereitzustellen. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Sitzvorrichtung, insbesondere einer Flugzeugsitzvorrichtung, mit wenigstens einer Sitzeinheit und wenigstens einer Arbeitsleuchteinheit.

Es wird vorgeschlagen, dass die Arbeitsleuchteinheit in einem rückwärtigen Bereich der Sitzeinheit angeordnet ist, wodurch eine besonders vorteilhafte Ausleuchtung eines Arbeitsbereichs einer Sitzeinheit erreicht werden kann. In diesem Zusammenhang kann unter einer "Sitzvorrichtung" eine aus wenigstens einer Sitzeinheit, vorzugsweise aus zumindest zwei Sitzeinheiten bestehende Vorrichtung verstanden werden, wobei die einzelnen Sitzeinheiten nebeneinander angeordnet sind. Idealerweise sind innerhalb eines Flugzeugs mehrere Sitzvorrichtungen hintereinander angeordnet, so dass die Arbeitsleuchteinheit im rückwärtigen Bereich einer Sitzeinheit zur Benutzung durch einen Passagier vorgesehen ist, der sich in einer Sitzeinheit hinter der die Arbeitsleuchteinheit umfassenden Sitzeinheit befindet. Ferner soll unter einer Arbeitsleuchteinheit insbesondere eine Einheit verstanden werden, die im Gegensatz zu einem Display bzw. zu einem Bildschirm in erster Linie dazu vorgesehen ist, einen außerhalb einer Arbeitsleuchteinheit befindlichen Arbeitsbereich auszuleuchten. Unter einem "rückwärtigen Bereich" kann insbesondere ein rückwandiger Bereich einer Rückseite einer Rückenlehne oder einer rückwärtigen Umhausung einer Sitzeinheit verstanden werden. Besonders vorteilhaft ist die Arbeitsleuchteinheit an einer Schaleneinheit einer rückwärtigen Umhausung der Sitzeinheit angeordnet, wodurch eine von einer Einstellung der Rückenlehne der Sitzeinheit unabhängige Beleuchtung durch die Arbeitsleuchteinheit für einen Bediener der Arbeitsleuchteinheit erreicht werden kann.

Des Weiteren wird vorgeschlagen, dass die Arbeitsleuchteinheit im Bereich oberhalb eines Arbeitstischs der Sitzeinheit angeordnet ist, wodurch eine für den Arbeitstisch besonders effiziente Beleuchtung erzielt werden kann. Unter "oberhalb eines Arbeitstischs" kann in diesem Zusammenhang insbesondere ein rückwärtiger Kopfstützenbereich der Sitzeinheit verstanden werden, so dass hierdurch eine direkte Beleuchtung des Arbeitstischs erreicht werden kann. Hierbei kann unter einem Kopfstützenbereich ein oberer rückwärtiger Bereich einer Sitzeinheit verstanden werden, der vorzugsweise maximal 30 % und besonders vorteilhaft maximal 20 % des oberen rückwärtigen Bereichs aufweist. Dabei kann unter einem "Arbeitstisch" eine ausklappbare Tischfläche verstanden werden, die an dem rückwärtigen Bereich der Sitzeinheit angeordnet ist.

Vorteilhafterweise ist die Arbeitsleuchteinheit im Bereich einer Kante der Sitzeinheit angeordnet, so dass hierbei eine besonders gute Sichtbarkeit der Arbeitsleuchteinheit erreicht werden kann. Zudem können durch die Anordnung der Arbeitsleuchteinheit im Bereich einer Kante differierende Leuchtbereiche mit nur einer Arbeitsleuchteinheit erzielt werden. In diesem Zusammenhang kann unter dem "Bereich einer Kante" ein die Kante umfassender Bereich verstanden werden und/oder ein Bereich, der innerhalb einer von zwei aufeinander stoßenden Ebenen nahe der Kante liegt, wobei der Abstand der Arbeitsleuchteinheit zur Kante vorzugsweise kleiner als 15 % und besonders vorteilhaft kleiner als 10 % einer senkrecht zur Kante ausgerichteten Erstreckungslänge der Ebene ist.

Zudem wird vorgeschlagen, dass eine Oberfläche der Arbeitsleuchteinheit gekrümmt ausgebildet ist, wodurch eine besonders gute Sichtbarkeit und ein großer Abstrahlwinkel des emittierten Lichts erreicht werden können. Dabei kann unter einer "gekrümmten Oberfläche" eine Oberfläche verstanden werden, die dreidimensional ausgerichtet ist und/oder von einer Kugeloberfläche, Zylinderoberfläche etc. gebildet ist.

In einer weiteren Ausgestaltung der Erfindung wird vorgeschlagen, dass eine Haupterstreckungsrichtung der Arbeitsleuchteinheit im Wesentlichen parallel zu einer Tischfläche eines Arbeitstischs am rückwärtigen Bereich der Sitzeinheit ausgerichtet ist. Unter im Wesentlichen parallel kann in diesem Zusammenhang eine Ausrichtung verstanden werden, die vorzugsweise einen Neigungswinkel kleiner als 15 % und besonders vorteilhaft kleiner als 10 % gegenüber einer Bezugsfläche aufweist. Hierdurch kann eine gleichmäßige Beleuchtung des Arbeitstischs erzielt werden, da ein Abstand der Arbeitsleuchteinheit zum Arbeitstisch entlang der Arbeitsleuchteinheit im Wesentlichen gleich groß ist, wobei der Arbeitstisch hierbei ausgeklappt ist und somit eine Erstreckungsfläche des Arbeitstischs parallel zu einem Boden, beispielsweise zu einem Flugzeugboden, ausgerichtet ist. In diesem Zusammenhang kann unter einer Haupterstreckungsrichtung einer Arbeitsleuchteinheit eine Richtung mit einer größten Erstreckung, insbesondere eine Länge, der Arbeitsleuchteinheit verstanden werden. Alternativ oder zusätzlich können eine oder mehrere Arbeitsleuchteinheiten auch senkrecht zur Arbeitsfläche am rückwärtigen Bereich des Sitzes ausgerichtet werden, wodurch eine unerwünschte Schattenbildung zumindest teilweise reduziert werden kann.

Zudem ist es vorteilhaft, wenn die Arbeitsleuchteinheit relativ zur Sitzeinheit bewegbar angeordnet ist, wodurch eine individuelle Anpassbarkeit der Ausleuchtung der Arbeitsfläche erreicht werden kann, indem die Arbeitsleuchteinheit auf einzelne Bereiche der Arbeitsfläche ausgerichtet werden kann. Besonders vorteilhaft ist dabei die Arbeitsleuchteinheit senkrecht zum rückwärtigen Bereich bewegbar angeordnet, so dass eine besonders effektive Ausleuchtung des Arbeitsbereichs erreicht werden kann. So kann beispielsweise beim Arbeiten mit einem tragbaren Computer, insbesondere mit einem Notebook, auf der Arbeitsfläche eine unerwünschte Schattenbildung aufgrund eines am tragbaren Computer befindlichen Bildschirms weitestgehend vermieden werden, indem die Arbeitsleuchteinheit direkt über den Ein- und Ausgabebereich des Computers verschoben werden kann.

Vorteilhafterweise ist die Arbeitsleuchteinheit an einem plastisch verformbaren Schwanenhalselement angeordnet, wodurch der Leuchtbereich der Arbeitsleuchteinheit auf beliebige Richtungen ausgerichtet werden kann und somit auch unerwünschte Schattenbildungen vermieden werden können. In diesem Zusammenhang kann unter einem "plastisch verformbaren Schwanenhals" ein in drei Dimensionen verbiegbarer Haltearm verstanden werden, der an einem Ende an der Sitzeinheit angeordnet ist und an dessen anderem Ende die Arbeitsleuchteinheit angeordnet ist.

Des Weiteren wird vorgeschlagen, dass die Arbeitsleuchteinheit um wenigstens eine Achse drehbar an der Sitzeinheit angeordnet ist, wodurch ein Leuchtbereich der Arbeitsleuchteinheit von einem Benutzer durch Drehen um eine Achse komfortabel eingestellt werden kann. Durch eine Drehung um eine Achse, die parallel zu einer Haupterstreckungsrichtung der Arbeitsleuchteinheit ausgerichtet ist, kann damit auch eine stabile Anordnung der Arbeitsleuchteinheit an die Sitzeinheit beibehalten werden. Besonders vorteilhaft ist es, wenn die Arbeitsleuchteinheit um zumindest eine zweite Achse drehbar an der Sitzeinheit angeordnet ist, so dass die Arbeitsleuchteinheit auf nahezu beliebige Richtungen ausgerichtet werden kann und dadurch eine Bildung von irritierenden Schatten zumindest teilweise vermieden werden kann.

In einer weiteren Ausgestaltung der Erfindung wird vorgeschlagen, dass die Sitzvorrichtung zumindest eine weitere Arbeitsleuchteinheit aufweist, wodurch eine gleichzeitige Ausleuchtung differierender Bereiche erzielt werden kann. Zudem können die zwei Arbeitsleuchteinheiten in differierenden Bereichen der Sitzeinheit angeordnet sein, so dass bei einer vorteilhaften Anordnung eine Reduzierung von Schattenbereichen durch die beiden Arbeitsleuchteinheiten erreicht werden kann, indem der Schattenbereich einer der beiden Arbeitsleuchteinheiten durch die andere Arbeitsleuchteinheit aufgehoben werden kann.

Ferner wird vorgeschlagen, dass zumindest eine Arbeitsleuchteinheit wenigstens eine Leuchtdiode als Leuchtmittel umfasst, wodurch eine besonders energiesparende Ausgestaltung der Arbeitsleuchteinheiten erzielt werden kann. Zudem zeichnen sich Leuchtdioden durch eine besonders lange Lebensdauer aus, so dass dadurch zusätzliche Kosten und Wartungsaufwand eingespart werden können. Alternativ oder zusätzlich sind auch weitere, dem Fachmann als sinnvoll erscheinende Leuchtmittel denkbar.

Vorteilhafterweise umfasst zumindest eine Arbeitsleuchteinheit wenigstens eine Leuchtfolie als Leuchtmittel, womit eine einfache und platzsparende Ausgestaltung von größeren Leuchtflächen, insbesondere gekrümmten Leuchtflächen, erreicht werden kann. Unter einer "Leuchtfolie" kann in diesem Zusammenhang insbesondere eine mehrschichtig aufgebaute Folie verstanden werden, und zwar insbesondere mit einer von einer Rückenelektrode, einer von einem Isolator, einer von einem Leuchtstoff und einer von einer Frontelektrode gebildeten Schicht.

In einer weiteren Ausgestaltung der Erfindung wird vorgeschlagen, dass die Sitzvorrichtung eine Einheit umfasst, die zu einer Änderung einer Lichtemission der Arbeitsleuchteinheit vorgesehen ist, wodurch die Lichtemission, beispielsweise von einem Passagier, geändert bzw. eingestellt und so einer Situation angepasst werden kann. Unter einer "Änderung einer Lichtemission" kann in diesem Zusammenhang eine Änderung einer Intensität verstanden werden und/oder auch eine Selektion verschiedener Wellenlängenbereiche des von der Arbeitsleuchteinheit emittierten Lichts. Die Auswahl verschiedener Wellenlängenbereiche kann beispielsweise durch ein Vorschalten unterschiedlicher optischer Wellenlängenfilter vor ein Leuchtmittel erreicht werden.

Ferner wird vorgeschlagen, dass die Einheit ein Einstellelement umfasst, das für ein zentrales Einstellen der Lichtemission der Arbeitsleuchteinheit vorgesehen ist, wodurch ein einfaches Einstellen und/oder Bedienen zumindest mehrerer Arbeitsleuchteinheiten durch ein zentrales Einstellelement erreicht werden kann. Dabei kann beispielsweise in einer Notfallsituation eines Flugzeugs zentral auf eine einheitliche Notfallbeleuchtung der Arbeitsleuchteinheiten umgeschaltet werden. Hierbei soll die Einstellung der Arbeitsleuchteinheit mittels eines zentralen Einstellelements eine höhere Priorität aufweisen als eine dezentrale Einstellung an der Arbeitsleuchteinheit durch einen Passagier, so dass während einer vorgegebenen Dauer der Einstellungen durch das zentrale Einstellelement die dezentrale Einstellung teilweise oder auch vollständig in einer Funktionalität eingeschränkt ist.

Vorteilhafterweise umfasst die Einheit zumindest ein Bedienelement, das für ein Einstellen der Lichtemission der Arbeitsleuchteinheit vorgesehen ist, wodurch ein komfortables Einstellen und/oder Bedienen für einen Bediener der Arbeitsleuchteinheit ermöglicht werden kann. Das Bedienelement kann dabei ein Schalterelement, das an der die Arbeitsleuchteinheit umfassenden Sitzeinheit angeordnet sein kann, und/oder eine Fernbedienung umfassen.

Die erfindungsgemäße Sitzvorrichtung eignet sich besonders vorteilhaft für Flugzeuge, ist jedoch auch in anderen, dem Fachmann als sinnvoll erscheinenden Bereichen einsetzbar, wie beispielsweise im Bereich von Fahrzeugen, wie größeren Personenwagen, Reisebussen, Schiffsfähren, oder im Rahmen einer Saalbestuhlung, wie für eine Kongresshalle, einen Theatersaal, einen Kinosaal usw.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine aus mehreren Sitzeinheiten bestehende Sitzvorrichtung,
- Fig. 2: einen schematischen Teilbereich einer Sitzvorrichtung mit einer Sitzeinheit und
- Fig. 3: einen schematischen Teilbereich einer Sitzeinheit aus Figur 2.

### Beschreibung des Ausführungsbeispiels.

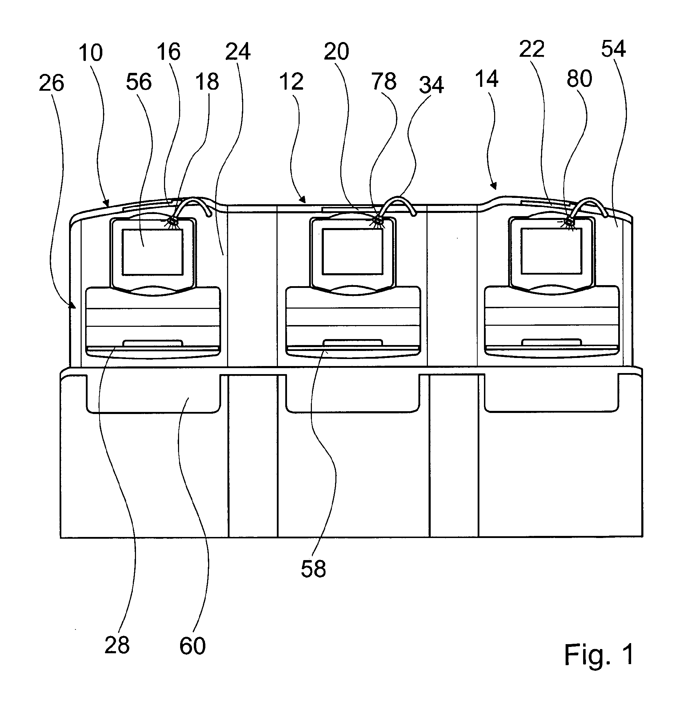

In Figur 1 ist schematisch eine Sitzvorrichtung dargestellt, die drei Sitzeinheiten 10, 12, 14 umfasst. An jeder der Sitzeinheiten 10, 12, 14 sind zwei Arbeitsleuchteinheiten 16, 18, 20, 22, 78, 80 in einem rückwärtigen Bereich der Sitzeinheiten 10, 12, 14 angeordnet. Dabei sind die Arbeitsleuchteinheiten 16, 20, 22 jeweils in einer Schaleneinheit 24 einer rückwärtigen Umhausung 26 angeordnet bzw. die Arbeitsleuchteinheiten 18, 78, 80 sind an jeweils einem Schwanenhalselement 34 angeordnet, wobei das Schwanenhalselement 34 an jeweils der rückwärtigen Umhausung 26 der Sitzeinheiten 10, 12, 14 platziert ist. Die Arbeitsleuchteinheiten 16, 20, 22 befinden sich dabei jeweils im Bereich einer Kopfstütze 54 der jeweiligen Sitzeinheiten 10, 12, 14. Unterhalb der Arbeitsleuchteinheiten 16, 20, 22 sind in die Schaleneinheiten 24 jeweils rechteckige Bildschirme 56 integriert. Unterhalb des Bildschirms 56 ist jeweils ein ausklappbarer Arbeitstisch 28 angeordnet, wobei die Arbeitstische 28 nach unten ausklappbar sind. In nicht ausgeklappter Anordnung der Arbeitstische 28 ist eine rückwärtige Tischfläche 58 jeweils bündig mit der rückwärtigen Schaleneinheit 24 der Umhausung 26 angeordnet. In ausgeklappter Anordnung der Arbeitstische 28 ist die Tischfläche 58 dabei parallel zu einer hier nicht näher dargestellten Bodenfläche eines Flugzeugs ausgerichtet. Unterhalb der Arbeitstische 28 ist in die rückwärtigen Umhausungen 26 jeweils ein Staufach 60 angeordnet, wobei eine Ablagefläche der Staufächer 60 im Wesentlichen parallel zu dem Boden des Flugzeugs ausgerichtet ist.

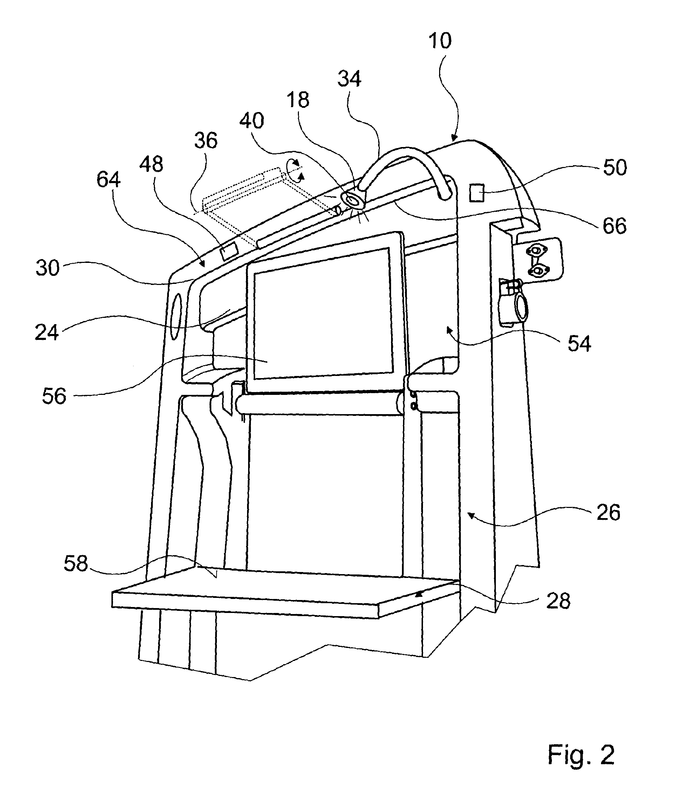

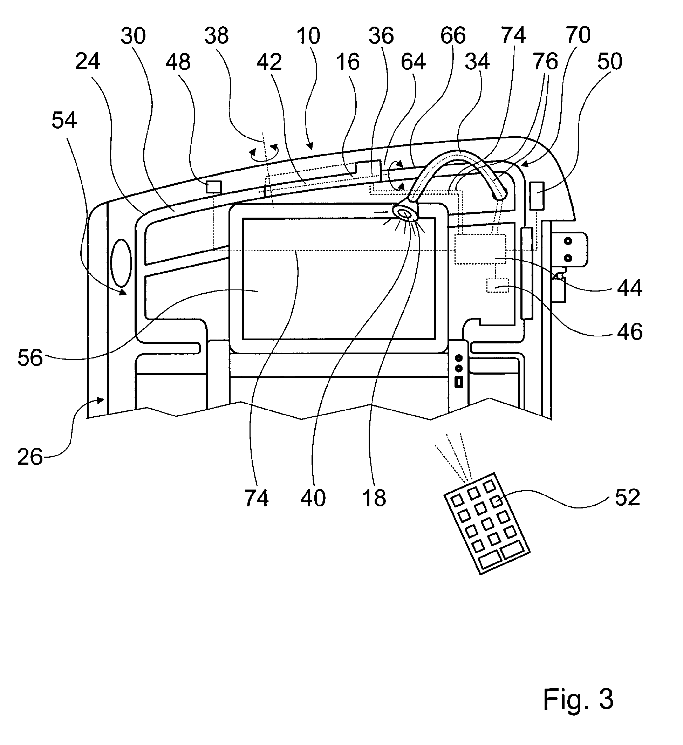

Figur 2 zeigt einen Teilschnitt, bestehend aus einer Sitzeinheit 10, der in Figur 1 dargestellten Sitzvorrichtung. Die dargestellte Sitzeinheit 10 umfasst zwei Arbeitsleuchteinheiten 16, 18, wobei die Arbeitsleuchteinheit 16 dabei in einem Kantenbereich 64 in einem Bereich einer Kopfstütze 54 der Sitzeinheit 10 angeordnet ist und die Arbeitsleuchteinheit 18 sich an dem plastisch verformbaren Schwanenhalselement 34 befindet. Zudem umfasst die Sitzeinheit 10 einen nach oben ausklappbaren Bildschirm 56, der unterhalb der Arbeitsleuchteinheiten 16, 18 angeordnet ist. Die Arbeitsleuchteinheit 16 im Kantenbereich 64 der rückwärtigen Umhausung 26 ist dabei im Wesentlichen parallel zu der Tischfläche 58 des ausgeklappten Arbeitstischs 28 ausgerichtet (Figur 3). Zudem ist die Arbeitsleuchteinheit 16 im Kantenbereich 64 so ausgerichtet, dass diese bündig mit der Schaleneinheit 24 der rückwärtigen Umhausung 26 abschließt (Figur 3). Durch die Anordnung im Kantenbereich 64 weist die Arbeitsleuchteinheit 16 eine gekrümmte Oberfläche auf, die sich über den gesamten, von der Arbeitsleuchteinheit 16 abgedeckten Kantenbereich 64 erstreckt. Durch die gekrümmte Oberfläche ist die Arbeitsleuchteinheit 16 einer äußeren Geometrie der Schaleneinheit 24 im Bereich der Kante 30 im rückwärtigen Bereich der Sitzeinheit 10 bündig angepasst. Zusätzlich wird durch die gekrümmte Oberfläche der Arbeitsleuchteinheit 16 Licht mit differierenden Abstrahlwinkeln emittiert. Die Arbeitsleuchteinheit 16 umfasst ein von einer Leuchtfolie 42 gebildetes Leuchtmittel, wobei die Leuchtfolie 42 im Wesentlichen einer Form der gekrümmten Oberfläche der Arbeitsleuchteinheit 16 angepasst ist (Figuren 2 und 3).

Um den Leuchtbereich durch die Arbeitsleuchteinheit 16 auf der Tischfläche 58 des Arbeitstischs 28 möglichst flexibel zu gestalten, ist die Arbeitsleuchteinheit 16 im Bereich der Kopfstütze 54 um zwei Achsen 36, 38 drehbar (Figur 3). Die Achse 36 ist dabei parallel zu einer Kantenlinie 66 des Kantenbereichs 64 der Sitzeinheit 10 ausgerichtet, so dass bei Drehung der Arbeitsleuchteinheit 16 um die Achse 36 ein Leuchtbereich mit einer hohen Lichtintensität der Arbeitsleuchteinheit 16 auf verschiedene Bereiche der Tischfläche 58 des Arbeitstischs 28 gerichtet wird. Zudem ist die Arbeitsleuchteinheit 16 um die weitere Achse 38 drehbar angeordnet, wobei die Achse 38 senkrecht zur Kantenlinie 66 des Kantenbereichs 64 und im Wesentlichen senkrecht zur Tischfläche 58 des ausgeklappten Arbeitstischs 28 verläuft und somit die Beleuchtung der Arbeitsfläche 28 noch flexibler gestaltbar ist (Figur 3). Die Drehung der Arbeitsleuchteinheit 16 um eine der beiden Achsen 36, 38 erfolgt dabei unabhängig von der Drehung um die andere Achse 36, 38.

Zudem ist die Arbeitsleuchteinheit 16 im Kantenbereich 64 der Sitzeinheit 10 bewegbar angeordnet, wie dies in Figur 2 gestrichelt dargestellt ist. Hierbei ist die Arbeitsleuchteinheit 16 senkrecht zur Schaleneinheit 24 der rückwärtigen Umhausung 26 und im Wesentlichen parallel zur Erstreckungsebene der Tischfläche 58 des ausgeklappten Arbeitstischs 28 verschiebbar. Zusätzlich ist die Arbeitsleuchteinheit 16 im verschobenen Zustand weiterhin um die Achse 36 drehbar, die parallel zur Kantenlinie 66 des Kantenbereichs 64 ausgerichtet ist. Somit ist neben einer flexiblen Beleuchtung des Arbeitstischs 28 auch eine effektive Ausleuchtung des unterhalb des Arbeitstischs 28 angeordneten Staufachs 60 erreichbar (Figur 1).

Neben der Arbeitsleuchteinheit 16 im Kantenbereich 64 der Sitzeinheit 10 ist in einem oberen Eckbereich 70 der Schaleneinheit 24 das plastisch verformbare Schwanenhalselement 34 angeordnet, an dem sich die weitere Arbeitsleuchteinheit 18 befindet (Figuren 2 und 3). Das Schwanenhalselement 34 wird dabei von einem plastisch verformbaren, schlauchartigen Haltearm gebildet, wobei an einem Ende des Schwanenhalselements 34 die Arbeitsleuchteinheit 18 angeordnet ist, an einem anderen Ende des Schwanenhalselements 34 dieses an der Schaleneinheit 24 montiert ist. Die Arbeitsleuchteinheit 18 am Schwanenhalselement 34 umfasst ein von einer Leuchtdiode 40 gebildetes Leuchtmittel. Um die Leuchtdiode 40 der Arbeitsleuchteinheit 18 mit Energie zu versorgen, befindet sich im Innern des Schwanenhalselements 34 eine Energieversorgungsleitung 76 (Figur 3). Das plastisch verformbare Schwanenhalselement 34 ist dabei dreidimensional verformbar, so dass ein Abstrahlbereich der Arbeitsleuchteinheit 18 auf einen nahezu beliebigen Winkelbereich einstellbar ist. Zudem ist ein über die Umhausung 26 überstehender Teil des Schwanenhalselements 34 flexibel in seiner Länge einstellbar, indem ein über die gewünschte Länge hinausreichender Teilbereich des Schwanenhalselements 34 in einer dafür vorgesehenen, hier nicht näher dargestellten Ausnehmung der rückwärtigen Umhausung 26 der Sitzeinheit 10 aufgenommen wird. Grundsätzlich ist es auch denkbar, die Sitzeinheit 10 mit weiteren Schwanenhalselementen zu versehen.

Des Weiteren umfasst die Sitzeinheit 10 eine Einheit 44, die zu einer Änderung einer Lichtemission der an der Sitzeinheit 10 angeordneten Arbeitsleuchteinheiten 16, 18 vorgesehen ist (Figur 3). Dabei ist mit der Einheit 44 sowohl eine Änderung der Lichtintensität als auch eine Selektion unterschiedlicher Wellenlängenbereiche in den Arbeitsleuchteinheiten 16, 18 möglich. Zusätzlich ist durch die Einheit 44 auch die Drehung der Arbeitsleuchteinheit 16 im Kantenbereich 64 um die zwei Achsen 36, 38 und die Verschiebung senkrecht zur rückwärtigen Umhausung 26 einstellbar. Die Selektion der unterschiedlichen Wellenlängenbereiche erfolgt hierbei durch ein Herausfiltern des gewünschten Wellenlängenbereichs mittels hier nicht näher dargestellter optischer Filter aus einem Spektralbereich des emittierten Lichts der jeweiligen Arbeitsleuchteinheit 16, 18. Die Änderung der Lichtintensität wird durch eine von der Einheit 44 differierende Stromzufuhr an die jeweilige Arbeitsleuchteinheit 16, 18 erreicht. Dabei ist die Einheit 44 mit den einzelnen, zu einer Sitzeinheit 10 gehörenden Arbeitsleuchteinheiten 16, 18 durch eine interne, von einem Datenbus gebildete Datenleitung 74 und die Energieversorgungsleitung 76 verbunden. Alternativ oder zusätzlich kann die interne Datenleitung 74 auch von einer Funkverbindung gebildet werden. Des Weiteren ist die Einheit 44 mit einer außerhalb der Sitzvorrichtung befindlichen und nicht näher dargestellten Stromversorgungseinheit über eine nicht näher dargestellte Stromversorgungsleitung verbunden.

Die Einstellung der Lichtintensität bzw. des gewünschten Wellenlängenbereichs erfolgt sowohl zentral durch ein zentrales Einstellelement 46 als auch durch drei Bedienelemente 48, 50, 52 (Figur 3), die direkt von einem Passagier bedienbar sind, der sich in einer hinter der Sitzeinheit 10 angeordneten Sitzeinheit befindet. Das Einstellelement 46 und die drei Bedienelemente 48, 50, 52 werden dabei von der Einheit 44 umfasst. Im Betrieb des zentralen Einstellelements 46 werden alle Arbeitsleuchteinheiten 16, 18, 20, 22, 78, 80 einheitlich mit der gleichen Einstellung belegt (Figuren 1 und 2). Dabei sind die Arbeitsleuchteinheiten 16, 18, 20, 22, 78, 80 im Betrieb des zentralen Einstellelements 46 nur noch von diesem innerhalb eines vorher festgelegten und/oder einstellbaren Zeitraums einstellbar. Das zentrale Einstellelement 46 ist über die interne Datenleitung 74 mit der Einheit 44 und über eine nicht näher dargestellte Datenleitung mit einem nicht näher dargestellten zentralen Bedienelement verbunden.

Die dezentrale Einstellung der jeweils von einer Sitzeinheit 10 umfassten Arbeitsleuchteinheiten 16, 18 erfolgt über die beiden von jeweils einem Schalterelement gebildeten Bedienelemente 48, 50, die direkt an der Sitzeinheit 10 angeordnet sind, wobei jeweils ein von einem Schalterelement ausgebildetes Bedienelement 48, 50 zum Einstellen jeweils einer Arbeitsleuchteinheit 16, 18 vorgesehen ist. Das Schalterelement ist hierbei jeweils von einem berührempfindlichen Schalterelement gebildet, das mit einem hier nicht näher dargestellten berührempfindlichen Touchpad ausgestaltet ist. Mittels der berührempfindlichen Schalterelemente kann ein Passagier sowohl die Intensität als auch den Wellenlängenbereich der jeweiligen Arbeitsleuchteinheit 16, 18 einstellen, wobei durch Berühren der Schalterelemente ein Einstellmenü am Bildschirm 56 aktiviert wird und somit ein einfacheres Einstellen und Ändern der Lichtemission der jeweiligen Arbeitsleuchteinheit 16, 18 erreicht wird. Grundsätzlich sind jedoch auch weitere, dem Fachmann als sinnvoll erscheinende berührempfindliche Schalterelemente jederzeit denkbar. Die von Schalterelementen ausgebildeten Bedienelemente 48, 50 sind entsprechend der Arbeitsleuchteinheiten 16, 18 auch im Bereich der Kopfstütze 54 der rückwärtigen Umhausung 26 der Sitzeinheit 10 angeordnet. Die Bedienelemente 48, 50 sind dabei über die interne Datenleitung 74 mit der Einheit 44 und den Arbeitsleuchteinheiten 16, 18 verbunden. Zusätzlich sind die Arbeitsleuchteinheiten 16, 18 über ein weiteres von einer zur Bedienung der Arbeitsleuchteinheiten 16, 18 vorgesehenen Fernbedienung ausgebildetes Bedienelement 52 bedienbar. Dieses ist über eine nicht näher dargestellte Datenleitung mit der Einheit 44 verbunden. Mit diesem Bedienelement 52 sind die einzelnen Arbeitsleuchteinheiten 16, 18 unabhängig voneinander einstellbar.

### Bezugszeichen

- 10: Sitzeinheit
- 12: Sitzeinheit
- 14: Sitzeinheit
- 16: Arbeitsleuchteinheit
- 18: Arbeitsleuchteinheit
- 20: Arbeitsleuchteinheit
- 22: Arbeitsleuchteinheit
- 24: Schaleneinheit
- 26: Umhausung
- 28: Arbeitstisch
- 30: Kante
- 34: Schwanenhalselement
- 36: Achse
- 38: Achse
- 40: Leuchtdiode
- 42: Leuchtfolie
- 44: Einheit
- 46: Einstellelement
- 48: Bedienelement
- 50: Bedienelement
- 52: Bedienelement
- 54: Kopfstütze
- 56: Bildschirm
- 58: Tischfläche
- 60: Staufach
- 64: Kantenbereich
- 66: Kantenlinie
- 70: Eckbereich
- 74: Datenleitung
- 76: Energieversorgungsleitung
- 78: Arbeitsleuchteinheit
- 80: Arbeitsleuchteinheit

## Patentansprüche

1. Sitzvorrichtung, insbesondere Flugzeugsitzvorrichtung, mit wenigstens einer Sitzeinheit (10, 12, 14) und wenigstens einer Arbeitsleuchteinheit (16, 18, 20, 22, 78, 80),
**dadurch gekennzeichnet,**
**dass** die Arbeitsleuchteinheit (16, 18, 20, 22, 78, 80) in einem rückwärtigen Bereich der Sitzeinheit (10, 12, 14) angeordnet ist.

2. Sitzvorrichtung nach Anspruch 1,
**dadurch gekennzeichnet,**
**dass** die Arbeitsleuchteinheit (16, 18, 20, 22, 78, 80) an einer Schaleneinheit (24) einer rückwärtigen Umhausung (26) der Sitzeinheit (10, 12, 14) angeordnet ist.

3. Sitzvorrichtung nach Anspruch 1 oder 2,
**dadurch gekennzeichnet,**
**dass** die Arbeitsleuchteinheit (16, 18, 20, 22, 78, 80) im Bereich oberhalb eines Arbeitstischs (28) der Sitzeinheit (10, 12, 14) angeordnet ist.

4. Sitzvorrichtung nach einem der vorhergehenden Ansprüche,
**dadurch gekennzeichnet,**
**dass** die Arbeitsleuchteinheit (16, 20, 22) im Bereich einer Kante (30) der Sitzeinheit (10, 12, 14) angeordnet ist.

5. Sitzvorrichtung nach einem der vorhergehenden Ansprüche,
**dadurch gekennzeichnet,**
**dass** eine Oberfläche der Arbeitsleuchteinheit (16, 20, 22) gekrümmt ausgebildet ist.

6. Sitzvorrichtung nach einem der vorhergehenden Ansprüche,
**dadurch gekennzeichnet,**
**dass** eine Haupterstreckungsrichtung der Arbeitsleuchteinheit (16, 20, 22) im Wesentlichen parallel zu einer Tischfläche (58) eines Arbeitstischs (28) am rückwärtigen Bereich der Sitzeinheit (10, 12, 14) ausgerichtet ist.

7. Sitzvorrichtung nach einem der vorhergehenden Ansprüche,
**dadurch gekennzeichnet,**
**dass** die Arbeitsleuchteinheit (16, 18, 20, 22, 78, 80) relativ zur Sitzeinheit (10, 12, 14) bewegbar angeordnet ist.

8. Sitzvorrichtung zumindest nach Anspruch 7,
**dadurch gekennzeichnet,**
**dass** die Arbeitsleuchteinheit (18, 78, 80) an einem plastisch verformbaren Schwanenhalselement (34) angeordnet ist.

9. Sitzvorrichtung zumindest nach Anspruch 7,
**dadurch gekennzeichnet,**
**dass** die Arbeitsleuchteinheit (16, 20, 22) um wenigstens eine Achse (36) drehbar an der Sitzeinheit (10, 12, 14) angeordnet ist.

10. Sitzvorrichtung zumindest nach den Ansprüchen 7 und 9,
**dadurch gekennzeichnet,**
**dass** die Arbeitsleuchteinheit (16, 20, 22) um zumindest eine zweite Achse (38) drehbar an der Sitzeinheit (10, 12, 14) angeordnet ist.

11. Sitzvorrichtung nach einem der vorhergehenden Ansprüche,
**gekennzeichnet durch**
zumindest eine weitere Arbeitsleuchteinheit (18, 78, 80).

12. Sitzvorrichtung nach einem der vorhergehenden Ansprüche,
**dadurch gekennzeichnet,**
**dass** die Arbeitsleuchteinheit (18, 78, 80) wenigstens eine Leuchtdiode (40) als Leuchtmittel umfasst.

13. Sitzvorrichtung nach einem der vorhergehenden Ansprüche,
**dadurch gekennzeichnet,**
**dass** die Arbeitsleuchteinheit (16, 20, 22) wenigstens eine Leuchtfolie (42) als Leuchtmittel umfasst.

14. Sitzvorrichtung nach einem der vorhergehenden Ansprüche,
**gekennzeichnet durch**
eine Einheit (44), die zu einer Änderung einer Lichtemission der Arbeitsleuchteinheit (16, 18, 20, 22, 78, 80) vorgesehen ist.

15. Sitzvorrichtung nach einem der vorhergehenden Ansprüche,
**dadurch gekennzeichnet,**
**dass** die Einheit (44) ein Einstellelement (46) umfasst, das für ein zentrales Einstellen der Lichtemission der Arbeitsleuchteinheit (16, 18, 20, 22, 78, 80) vorgesehen ist.

16. Sitzvorrichtung nach einem der vorhergehenden Ansprüche,
**dadurch gekennzeichnet,**
**dass** die Einheit (44) zumindest ein Bedienelement (48, 50, 52) umfasst, das für ein Einstellen der Lichtemission der Arbeitsleuchteinheit (16, 18, 20, 22, 78, 80) vorgesehen ist.
